Europäisches Patentamt

European Patent Office

Office européen des brevets

(19)

(11) Publication number: **0 397 224**

**A1**

(12) **EUROPEAN PATENT APPLICATION**

(21) Application number: **90200751.7**

(22) Date of filing: **29.03.90**

(51) Int. Cl.5: **C03B 37/01, C03B 37/10**

(30) Priority: **09.05.89 IT 2042789**

(43) Date of publication of application:
**14.11.90 Bulletin 90/46**

(84) Designated Contracting States:
**AT BE CH DE DK ES FR GB GR LI LU NL SE**

(71) Applicant: **STUDECO S.r.l.**
**Via Diaz 10**
**I-21047 Saronno, Varese(IT)**

(72) Inventor: **Ratti, Aldo**
**Via Favia 7**
**I-21047 Saronno (Varese)(IT)**

(74) Representative: **De Carli, Erberto et al**
**ING. BARZANO' & ZANARDO MILANO S.p.A.**
**Via Borgonuovo, 10**
**I-20121 Milano(IT)**

(54) **Insulating wool production plant of reduced environmental impact.**

(57) The insulating wool production plant (for example for glass wool and/or rock wool) of reduced environmental impact comprises at least one forming machine (32), at least one polymerization oven (33), first air treatment means (34) and second air treatment means (35). The total air load (37) of the forming machine and the total air load (40) of the polymerization oven are fed to the first air treatment means (34), from the buffer vessel (49) of which there is drawn off a recycle air load (43). Both the forming machine (32) and the polymerization oven (33) introduce infiltration air loads (39) and (42) which result in the need for a bleed air load (44) to be discharged to atmosphere through the second air treatment means (35).

Fig.1

## INSULATING WOOL PRODUCTION PLANT OF REDUCED ENVIRONMENTAL IMPACT

This invention relates to an insulating wool production plant of low environmental impact.

Current plants for producing insulating wool (such as glass wool or rock wool) comprise essentially the use of:
- a furnace for melting the raw material (glass or rock),
- a forming or collecting machine and
- a polymerization oven, and possibly
- first means for treating the air before discharging it into the atmosphere.

Between the forming machine and the polymerization oven or downstream of this latter there can be provided a series of machines which operate on the product to give it the required shape and size.

The forming machine, and to a lesser extent the polymerization oven use large quantities of environmental air for their operation.

To give an idea, a forming machine and the relative polymerization oven for an hourly production of about 5000 kg/h of insulating wool require a total air load exceeding 200,000 $Nm^3/h$ (normal cubic metres per hour).

The total air load, which is drawn in from the surrounding environment, is made up of a principal air load (possibly supplied by suitable blowers) plus an infiltration load.

The infiltration load is due to the fact that neither the forming machine nor the polymerization oven are airtight against the surrounding environment, and this would in any event be impossible to achieve because of the various process operations, which are carried out substantially in continuous cycle (loading and discharge of material, regulation and control etc.). In addition they operate under negative pressure to prevent polluted air being ejected into the surrounding environment.

The total air load was formerly expelled directly into the atmosphere together with the pollutant load absorbed during the plant operating cycle. In recent years however the polluting effect of the plant and thus its impact on the surrounding environment have been reduced by passing through first air treatment means that air which is to be discharged to atmosphere.

These means can comprise:
- filter chambers in which the air passes through glass or rock wool panels which remove part of the pollutants;
- water wash towers which transfer the pollutant substances to the water, which can then be treated by complex chemical-biological plants, by incineration or by other means;
- air incinerators, which oxidize the chemical substances contained in the air and retain the suspended dust by bag filters or electrostatic precipitators or the like.

Current plants are however of costly construction and maintenance (because they operate on very high air loads) and are not sufficiently effective in limiting pollution even though they are able remove up to 80-90% of the pollutant substances. For example, where the total air load is 200,000·$Nm^3/h$ it is considered a good result if current means reduce pollutant organic substances from more than 100 to about 30 $mg/Nm^3$ and dust from more than 500 to about 100 $mg/N\mu^3$.

This however means that up to 6 kg/h of organic pollutants and 20 kg/h of dust are still fed into the environment, this corresponding in absolute terms to several tons of pollutants during every year of plant operation. The major obstacle to further reduction in the absolute quantity of pollutants fed into the external environment is due principally to the fact that a considerable air load has to be treated, so that even if the purification can reach values of 80-90%, the quantity of pollutants expelled into the atmosphere is unfortunately still very high.

The object of the present invention is to provide an insulating wool production plant which is able to obviate the aforesaid drawbacks by considerably reducing the quantity of pollutants which the plant feeds into the surrounding environment.

This object is attained by an insulating wool production plant of reduced environmental impact comprising substantially at least one furnace for melting the raw material, at least one machine for forming this into fibres and for then depositing the insulating wool, at least one oven for the polymerization of the insulating wool already in fibre form originating from the forming machine, and first means for treating the air used by the plant, said forming machine processing a total air load being the sum of a principal air load plus an infiltration air load, said polymerization oven processing a total air load being the sum of a principal air load plus an infiltration air load, the total air load of the forming machine and the total air load of the polymerization oven being fed to said first air treatment means, which reduce the pollutant content of said total air load, characterised in that the air load leaving said first air treatment means is composed of a recycle air load and a bleed air load, at least said recycle air load being fed at least to the forming machine in at least partial substitution of the relative principal air load.

The bleed air load fed into the atmosphere is therefore considerably less than the total air load fed into the atmosphere by conventional plants, thus even for equal residual concentrations in the two loads (possibly obtained by identical first air treatment means), the absolute quantity of pollutant substances fed into the surrounding environment by the plant according to the invention is much less than that of conventional plants.

It should also be noted that whereas in conventional plants the first air treatment means served only to reduce the quantity of pollutants fed into the atmosphere, in the case of the plant according to the invention they serve firstly to eliminate the pollutant substances and undesirable chemical compounds which would otherwise accumulate in the plant and make recycling impossible, and secondly to improve the operating conditions of possible second purification means which if provided have to process only the small bleed air load before feeding it into the atmosphere.

In this respect, the presence of the first air treatment means and the low feed rate to the second air treatment means enable the most advanced air treatment methods to be used, resulting in a much higher extent of purification per cubic metre of treated air. With the plant according to the invention it is therefore possible to achieve excellent results in limiting environmental impact even using conventional purification means of relatively low clean-up, because of the small air load expelled to atmosphere.

Again, when it is considered that a large amount of residual heat energy is present in the air expelled into the atmosphere by such plants, this limiting of the expelled air load favours energy saving, indirectly giving rise to a further reduction in upstream pollution produced by the means for heating the plant process air. The considerable economical advantages in terms both of plant construction and operation are therefore apparent.

The invention is illustrated by way of non-limiting example in the figures of the accompanying drawings.

Figure 1 shows a possible simplified flow diagram of a plant according to the invention, The full lines represent air flows, the dashed lines represent water flows and the dashed and dotted lines represent material flows.

Figure 2 is a further flow diagram of a plant according to the invention.

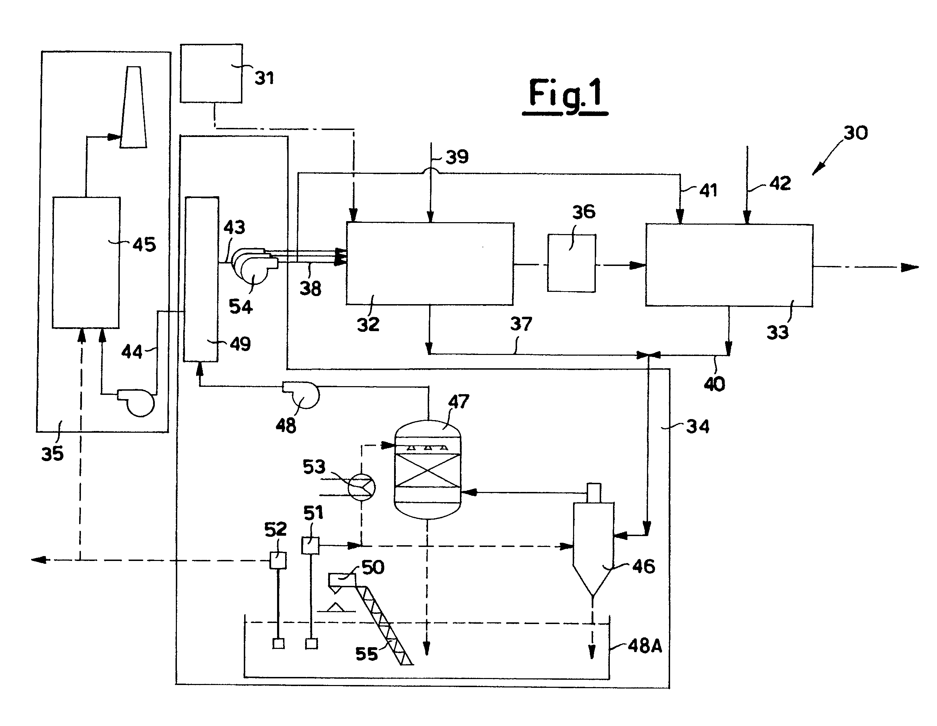

With particular reference to Figure 1 the plant according to the invention, indicated overall by 30, is used for producing insulating wool such as glass or rock wool. The plant 30 comprises at least one furnace 31 for melting the raw material, at least one forming machine 32, at least one polymerization oven 33, and first means 34 and second means 35 for treating the air used by the plant 30.

Operation-performing machines indicated overall by 36 can be provided between the forming machine 32 and polymerization oven 33 for the purpose of transforming the product into for example blankets, pipe coverings or the like, or merely for weighing it. The raw material (glass or rock) melted by the furnace 31 is fed to the forming machine 32 where a series of air currents deposits the spun fibre sprayed with resins acting as adhesives onto a mobile belt in the required form.

The machines 36 give the product the required shape and dimensions and possibly weigh it.

By suitable heating, the polymerization oven 33 polymerizes the sprayed resin so that the product assumes the required consistency. The plant 30 and in particular the forming machine 32 and the polymerization oven 33 require for their operation a large air load which is purified by the first and second air treatment means 34 and 35 respectively, before being returned to the atmosphere in a manner which prevents pollution of the surrounding environment so that environmental impact of the plant is avoided. The forming machine 32 processes a total air load 37 represented by the sum of a principal air load 38 plus an infiltration air load 39.

The polymerization oven processes a total air load 40 represented by the sum of a principal air load 41 plus an infiltration air load 42. The total air load of the forming machine 37 and the total air load of the polymerization oven 40 are fed to the first air treatment means 34 which reduce the pollutant content of the air loads 37 and 40.

The air load leaving said first air treatment means 34 is composed of a recycle air load 43 and a bleed air load 44.

The recycle air load 43 is substantially divided into a first and second portion equivalent respectively to the principal air load 38 of the forming machine and the principal air load 41 of the polymerization oven, to which plant items the first and second portion of recycle air load are fed in substitution of the principal air load 38 of the forming machine and the principal air load 41 of the polymerization oven.

The bleed air load 44 is equivalent to the infiltration air load 39 of the forming machine plus the infiltration air load 42 of the polymerization oven.

After the bleed air 44 has been processed by the first air treatment means 34 it can be fed to the second air treatment means and then released to atmosphere, or be fed directly to atmosphere if the low plant load and/or the low concentrations mean that the required pollution limits are not exceeded.

The bleed air load 44 discharged to atmosphere, and thus into the surrounding environment, is equal to the sum of the infiltration air loads 39 and 42, which are themselves considerably lower than the principal air loads 38 and 41 of the forming machine 32 and polymerization oven 33 respectively, and obviously considerably lower than the total air loads 37 and 40.

Consequently after the bleed air load 44 has passed through the first and second air treatment means 34 and 35, it contains a considerably reduced pollutant quantity in terms both of percentage (because of the double treatment) and of absolute value (because of the low load).

The first air treatment means 34 comprise for example, in the order in which the air flows through them, at least one cyclone washer 46 for initial dust removal, at least one fine dust removal and controlled cooling tower 47, at least one recirculation blower 48 and possibly a buffer vessel 49.

The water used by the cyclone washer 46 and fine dust removal and controlled cooling tower 47 is discharged into a common tank 48A. The common tank 48A also contains a filter grid 55 and a sludge press 50.

A water circulating pump 51 withdraws water from the tank 48A and feeds it both to the fine dust removal and controlled cooling tower 47 and to the cyclone washer 46. A water extraction pump 52 removes the excess water which builds up in the tank and feeds it to an incinerator 45 forming part of the second means 35 if such means are provided. The excess water is eliminated by the incinerator 45 which transforms it into steam, oxidizing the organic substances present.

That portion of the recycle air load for the forming machine, which as stated corresponds to the principal air load 38 of the forming machine, must undergo controlled cooling before being fed to the forming machine 32.

The controlled cooling of the recycle air load 43 results in suitable cooling of the fibres which deposit in the forming machine 32 and eliminates any surplus water present in the recycle air load 43.

The water surplus is due to the infiltration air loads 39 and 42, the combustion processes which take place in the polymerization oven 33, and the evaporation of the water contained in the resin sprayed into the forming machine 32.

It is true that water is eliminated in discharging the bleed air load 44, but this may be insufficient for the purpose and controlled cooling of the recycle air load 43 is therefore required, with condensation of part of the water present.

The controlled cooling can be effected by various methods, some of which are stated below by way of example:

- in a first method the air temperature is controlled by evaporating water at any point of the air circuit, including the forming machine;
- in a second method a heat exchanger with its surface directly in contact with the air is used;
- in a third method the air comes into contact with colder water able therefore to absorb the excess heat, which is later transferred to the external environment through a heat exchanger.

The first method is economical but introduces steam into the air circuit and requires considerable bleed-off of wet air to remove a water quantity equal to that introduced. In order to limit the air bleed, this method must be combined with the second or third method so that at least part of the steam is removed as condensate.

The second method requires a certain amount of maintenance work on the heat exchanger, which tends to clog because of the presence of sticky dust.

The third method is more reliable than the second and can be combined with a fine dust removal system by simply adding a heat exchanger into the circuit of the water used for the dust removal.

In the illustrated case the third method has been chosen, using a water-water heat exchanger 53. It should be noted that the temperature control of the recycle air load 43 results in heat being removed both from the principal air load 38 of the forming machine and from the principal air load 41 of the polymerization oven.

As stated, removal of heat from the principal air load 38 also results in water removal from the plant and cooling of the hot fibres in the forming machine 32.

However, removal of heat from the principal air load 41 decreases the thermal efficiency of the polymerization oven 33.

Consequently, the first air treatment means 34 could be constructed such as to simultaneously satisfy the optimum operational requirements both of the forming machine 32 and of the polymerization oven 33.

This possibility however is attractive only in plants exceeding a certain capacity. In such a case the total air load 37 of the forming machine and the total air load 40 of the polymerization oven are fed separately to the first air treatment means 34 so that the temperature of the first total air load 37 undergoes temperature control whereas the total air load 40 not only retains its entire heat content, but if possible increases it by heat exchange with other points of the plant at higher temperature. It could for example be possible to increase the temperature of the air load 40, with heat recovery downstream of the incinerator furnace 45, so as to recycle it to the polymerization oven 33 and reduce or eliminate fuel consumption in the oven 33.

The principal air load 38 of the forming machine is very much greater than the principal air load 41 of the polymerization oven. As the principal air load 38 to be recycled to the forming machine 32 divided into different quantities at different pressures, it may be necessary to use a plurality of blowers 54 and insert a buffer vessel 49 between the recirculation blower 48 and the blowers 54. The buffer vessel 49 prevents interference between the various blowers 54 which could lead to turbulence or pressure fluctuations at the common withdrawal point and thus create disturbances in the delivery of the various loads.

For this reason, the bleed air load 44 is controlled, its extent determined and its withdrawal effected at said vessel 49 in this case. The air load 44 is fed to the second means 35 for possible final treatment before discharge to atmosphere. It should be noted that the bleed air load 44 is discharged to totally remove from the closed circuit those pollutants which are still present and not removed with the water discharge.

The buffer vessel 49 is not however strictly necessary. It could for example be dispensed with if it has only to serve the polymerization oven 33, where the only air recycled is that to replace the infiltration of environmental air.

If the air loads 40, 41 and 42 relative to the polymerization oven 33 are kept separate from the other air loads only one recycle blower would be required, downstream of which a part of the processed air load would be immediately bled off, for example by an automatic valve controlled by the pressure in the circuit. In this case the bleed is required not only to compensate the air infiltration and water accumulation but also to prevent the $CO_2$ which forms in the combustion process building up in the circuit. With other forming systems in which various blowers are not required for feeding different air quantities into the forming machine, the buffer vessel 49 could also not be necessary

In the plant according to the invention the bleed air load 44 is the only load which being discharged into the atmosphere is determining with respect to the pollution of the surrounding environment. The extent of said load 44 is a function of the infiltration air loads 39 and 42.

By reducing said loads 39 and 42 there is a consequent reduction in pollution and thus a reduction in the environmental impact of the plant 30.

To reduce the infiltration air loads 39 and 42 to a minimum, a fraction of the recycle air load 43 is bled off at the buffer vessel 49 and fed to the polymerization oven 33 and/or to the forming machine 32 into those regions in which the infiltration load 39 occurs. However, as it is not possible to seal the plant against the external environment because of the material entry and product exit which take place principally at said regions, these regions are designed such that the recycle air load 43 maintains them at a pressure which is intermediate between the less than atmospheric pressure inside the forming machine 32 with which said regions are physically in communication, and the atmospheric pressure of the external environment, with which said regions are also physically in communication.

By varying the recycle air load 43 it is possible to set the pressure within said controlled pressure regions such that it differs from the pressure of the external environment by a quantity which is as small as is desired, and such that the infiltration air loads 39 and 42 (and thus the bleed air load 44) are reduced to a value substantially of zero. For example the polymerization oven 33 and/or the forming machine 32 can be constructed to comprise prechambers at least upstream and downstream of the inlets and outlets of the oven 33 and forming machine 32.

The recycle air load 43 is fed into said prechambers, not shown, to limit to a minimum the entry of the infiltration air load 39 and 42 into them, thus reducing the bleed air load 44 to a minimum.

A further method for limiting the entry of infiltration air 39 and 42 is to feed the recycle air 43 into the infiltration points themselves without providing said prechambers, so that the recycle air 43 replaces the infiltration air 39 and 42 as much as possible.

By way of example the operating data are given hereinafter for a conventional plant and for a plant according to the invention of equal capacity (5000 kg/h of rock wool) constructed in accordance with Figure 1.

Both the plants in question produce rock wool in blanket form. The molten rock is spun, impregnated with resin and fed into the forming machine 32 in which it is collected in the form of a soft blanket on a mobile belt.

The purpose of the air fed into the machine is to both convey and cool the fibres and is drawn out from the bottom of the machine so that the fibres collect on the belt in blanket form.

5

The blanket leaves the forming machine and passes firstly through a weighing station and then into the polymerization oven 33 in which it is firstly adjusted to the required thickness by compressing rollers and then heat-treated with hot circulating air to polymerize the resin and thus obtain a stable and rigid product which passes to final processing. A certain quantity of air must also be extracted from the polymerization oven to compensate for the oxygen consumed by the burners and the infiltrated environmental air, which is technically difficult to prevent. The air extracted from the forming machine 32 and from the polymerization oven 33 is contaminated with dust and chemical substances (phenol + formaldehyde + derivatives) originating from the resin.

In the conventional plant the total air load leaving the forming machine and polymerization oven is indicatively:

| | |
|---|---|
| Flow rate | 200,000 $Nm^3 \cdot h$ |
| Temperature | 50-60 °C |
| Dust content (rock wool filaments) | 500-1000 mg/$Nm^3$ |
| Organic substances content (phenol + formaldehyde + derivatives) | 100-200 mg/$Nm^3$ |

Even using first air treatment means, which may be provided in the conventional plant, it is difficult to obtain a pollutant concentration, before discharge into the atmosphere of less than:

| | |
|---|---|
| Dust | 100 mg/$Nm^3$ |
| Organic substances | 30 mg/$Nm^3$ |
| giving a rate equivalent of: | |
| Dust | 20 kg/h |
| Organic substances | 6 kg/h |

discharged into the environment, and which for production based on 6500 hours of operation per year correspond to:

| | |
|---|---|
| Dust | 130,000 kg/year |
| Organic substances | 39,000 kg/year |

At the same time, assuming the environmental air is at 30 °C against for example 0 °C of outside temperature, about 1,880,000 kcal/h are lost to atmosphere, and this quantity must be made up in the plant.

In the plant according to the invention, the air loads leaving the forming machine 37 and polymerization oven 40 are subjected to dust removal and cooling, to obtain a load of the following characteristics:

| | |
|---|---|
| Flow rate | 200,000 $Nm^3$/h |
| Temperature | 30 °C |
| Dust | 100 mg/$Nm^3$ |
| Organic substances | 500-1000 mg/$Nm^3$ |

During air recycling, the organic substances tend to accumulate in the air itself when using the type of scheme described, which utilizes water in closed circuit for pretreating the air.

Of the stated loads 37 and 40, most (loads 38 and 41) is recycled (170,000 $Nm^3$/h) whereas the load 44, which is only 30,000 $Nm^3$/h, is fed to final treatment (incineration and filtration) from which it is discharged to atmosphere with the following characteristics:

6

| Flow rate | about 30,000 Nm³/h |
|---|---|
| Temperature | about 150 °C |
| Dust | 30 mg/Nm³ |
| Organic substances | 30 mg/Nm³ |

consequently discharging into the atmosphere:

| Dust | 0.9 kh/h |
|---|---|
| Organic substances | 0.9 kg/h |

which on the basis of 6500 working hours per year correspond to:

| Dust | 5850 kg/year |
|---|---|
| Organic substances | 5850 kg/year |

The quantity of heat which has to be fed into the surrounding environment to compensate losses is only 280,000 kcal/h, a quantity much less than that which has to be fed into the surrounding environment in the case of a conventional plant of equal capacity.

The above data indicate the great ecological importance of the invention, which considerably reduces the degree of pollution produced by this type of plant (more than 20 times in the case of dust and nearly seven times in the case of organic substances in the example considered).

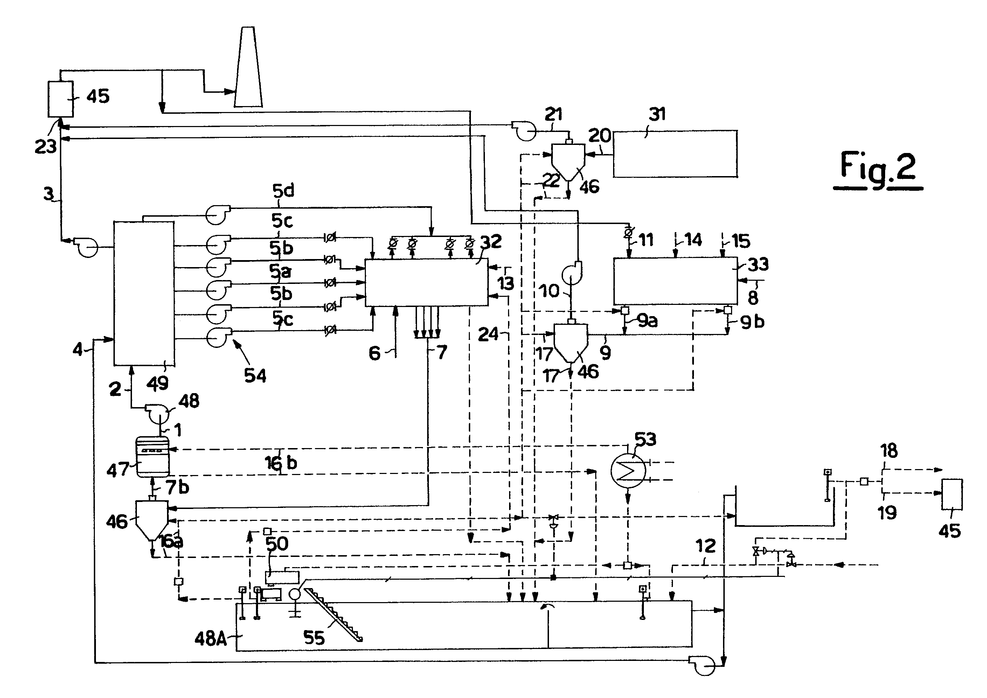

The fuel consumption necessary for heating the buildings and thus the relative pollution produced are also considerably reduced. Figure 2 shows a plant according to the invention designed for even further energy saving than the plant shown in Figure 1, with the result that it includes certain components not expressly present in the plant of Figure 1. In particular, the air load from the polymerization oven 33 and from the electric furnace 31 which melts the raw material is fed to first and second air treatment means, 34 and 35 respectively, which reduce the pollutant content of said air load before it is released to atmosphere.

In the case shown by way of example, the first air treatment means 34 comprise a cyclone washer 46, and the second air treatment means 35 comprise an incinerator 45.

The air loads from the polymerization oven 33 and the raw material melting furnace 31 are fed to the first air treatment means 34 separately from the air load 37 from the forming machine 32. In this manner, the first air treatment means by evaporating part of the water used also serve to expel water from the system already in the vapour state, so reducing the fuel consumption in the second treatment means represented by the incinerator furnace 45. A hot air load is also withdrawn downstream of the incinerator 45 and fed to the polymerization oven 33 to minimize fuel consumption in this latter.

The following table gives the characteristics of the loads concerned at important points in the plant of Figure 2.

| REF. NO. | DRY AIR LOAD (Nm³/h) | STEAM LOAD (kg/h) | WATER LOAD (kg/h) | TEMPE-RATURE (°C) | PRES-SURE (mm W.C.) | NOTES |
|---|---|---|---|---|---|---|
| 1 | 200,000 | 5,500 | – | 25 | -600 | |
| 2 | 200,000 | 5,500 | – | 30 | ≃ 0 | |
| 3 | 20,000 | 550 | – | 30 | > 0 | |
| 4 | 1,000 | 50 | – | 30 | > 0 | |
| 5,5a-5d | 181,000 | 5,000 | – | 30 | > 0 | |
| 6 | 19,000 | 400 | – | 30 | 0 | |
| 7 | 200,000 | 5.600 | – | 50 | -450 | |
| 7b | 200,000 | 7,000 | – | 32 | -500 | |
| 8 | 4,000 | 100 | | 30 | 0 | |
| 9,9a,9b | 10,000 | 1,350 | | 150 | -400 | |
| 10 | 10,000 | 1,850 | | 60 | -500 | |
| 11 | 6,000 | 200 | – | 900 | > 0 | |
| 12 | | | 500 | | | |
| 13 | | | 200 | | | Resin water |
| 14 | | | 800 | | | Resin water |
| 15 | | | 250 | | | Water from $CH_4$ combustion |
| 16a | | | -1400 | | | Difference inlet-outlet |
| 16b | | | +1500 | | | Difference inlet-outlet |
| 17 | | | -500 | | | Difference inlet-outlet |

| | | | | | | |
|---|---|---|---|---|---|---|
| 18 | | | 0÷4500 | | | At resin plant |
| 19 | | | 0÷3000 | | | At incinerator |
| 20 | 2,000 | 300 | | 150 | ≃ 0 | |
| 21 | 2,000 | 400 | | 60 | -100 | |
| 22 | | | -100 | | | Difference inlet-outlet |
| 23 | 27,000 | 2,800 | | 45 | ≃ 0 | |
| 24 | | | 50,000 | 30 | | |

LEGEND

30) Plant
31) Electric furnace
32) Forming machine
33) Polymerization oven
34) First air treatment means
35) Second air treatment means
36) Operation-performing machines
37) Total air load of 32
38) Principal air load of 32
39) Infiltration air load of 32
40) Total air load of 33
41) Principal air load of 33
42) Infiltration air load of 33
43) Recycle air load
44) Bleed air load
45) Incinerator furnace
46) Cyclone washer
47) Fine dust removal and cooling tower
48) Recirculation blower
49) Buffer vessel
48A) Common tank
50) Sludge press
51) Water circulation pump
52) Water extraction pump
53) Water-water heat exchanger
54) Blowers
55) Filter grid.

## Claims

1. An insulating wool production plant (1) of reduced environmental impact comprising substantially at least one furnace (31) for melting the raw material, at least one machine (32) for forming this into fibres and for then depositing the insulating wool, at least one oven (33) for the polymerization of the insulating wool already in fibre form originating from the forming machine (32), and first means (34) for treating the air used by the plant, said forming machine (32) processing a total air load (37) being the sum of a principal air load (38) plus an infiltration air load (39), said polymerization oven (33) processing a total air load (40) being the sum of a principal air load (41) plus an infiltration air load (42), the total air load (37) of the forming machine and the total air load (40) of the polymerization oven being fed to said first air treatment means (34), which reduce the pollutant content of said total air load, characterised in that the air load leaving said first air treatment means is composed of a recycle air load (43) and a bleed air load (44), at least said recycle air load (43) being fed at least to the forming machine (32) in at least partial substitution of the relative principal air load (38).

2. A plant as claimed in claim 1, characterised in that the principal air load (38) of the forming machine is subjected to controlled cooling before being fed into said forming machine (32).

3. A plant as claimed in claim 1, wherein the recycle air load (43) is fed both to the forming machine (32) and to the polymerization oven (33) in substitution of the relative principal air loads (38, 41) respectively, the bleed air load (44) being equal to the infiltration air load (39) of the forming machine plus the infiltration air load (42) of the polymerization oven.

4. A plant as claimed in claim 1, characterised in that the bleed air load (44) is bled from the first air treatment means (34) and is released to atmosphere after passing through the second air treatment means (35).

5. A plant as claimed in claim 1, characterised in that the first air treatment means (34) comprise, in the order in which the air passes through, at least one cyclone washer (46), at least one fine dust removal and controlled cooling tower (47) and at least one recirculating blower (48), said cyclone washer (46) and said fine dust removal and controlled cooling tower (47) discharging the water used for treating the air into a common tank (48A) from which it is withdrawn by a water circulation pump (51) and maintained at a predetermined level by a pump (52) for extracting the excess water.

6. A plant as claimed in claim 5, characterised in that the first air treatment means (34) comprise a buffer vessel (49) from which the recycle air load (43) and bleed air load (44) are drawn off.

7. A plant as claimed in claim 2, characterised in that the controlled cooling is effected by counter-current spraying of water at a suitably lower temperature, the heat given up to said water being then removed by a heat exchanger (53).

8. A plant as claimed in claims 4 and 6, characterised in that the bleed air load (44) is withdrawn in correspondence with the buffer vessel (49).

9. A plant as claimed in claim 1, characterised in that the second air treatment means (35) comprise an incinerator furnace (45).

10. A plant as claimed in claim 9, characterised in that, downstream of the incinerator furnace (45), the second air treatment means (35) comprise heat recovery and dust removal means.

11. A plant as claimed in claim 9, characterised in that at least part of the hot incinerated air leaving the incinerator furnace (45) is recycled to the polymerization oven (33) in at least partial substitution of the fuel consumed therein.

12. A plant as claimed in claim 10, wherein the heat recovered downstream of the incinerator furnace (45) is also used in the polymerization oven (33) to limit its fuel consumption.

13. A plant as claimed in claims 5 and 9, characterised in that the excess water extraction pump (52) feeds this water to the incinerator furnace (45).

14. A plant as claimed in claim 1, characterised in that at least those regions in which the infiltration air load (39) of the forming machine arises are maintained, by means of the recycle air load (43), at a pressure intermediate between the less than atmospheric pressure of the interior of the forming machine and the atmospheric pressure of the environment (39) external to said machine.

15. A plant as claimed in claim 14, characterised in that the pressure within said controlled pressure regions differs from the pressure of the external environment by a quantity which can be made as small as desired, such that the infiltration air loads (39) and (42) tend towards zero, as does consequently the bleed air load (14).

16. A plant as claimed in claim 15, characterised in that said controlled pressure regions comprise at least one prechamber disposed both upstream and downstream of the entrances and exits of the forming machine (32) and polymerization oven (33).

17. A plant as claimed in claim 1, characterised in that the entry of the infiltration air (39 and 42) into the forming chamber (32) and into the polymerization oven (33) is limited by feeding recycle air (41) into the regions in which the infiltration air (39) and (42) enters, so as to at least partly replace it.

18. A plant as claimed in claim 1, characterised in that the treated air (43) is reused as process air in substitution of ambient air in all possible uses relative both to the forming machine (32) and to the polymerization oven (33).

19. A plant as claimed in claim 1, characterised in that the air load used by the raw material melting furnace (31) is fed to the first (34) and second (35) air treatment means, which reduce the pollutant content of said air load before its discharge to atmosphere.

Fig.1

EP 0 397 224 A1

Fig.2

EP 0 397 224 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 111 672 (BATTIGELLI et al.) <br> * Whole document * <br> --- | 1-20 | C 03 B 37/01 <br> C 03 B 37/10 |
| A | US-A-4 230 471 (LEVECQUE et al.) <br> * Whole document * <br> --- | 1-20 | |
| A | US-A-3 762 896 (BORST) <br> --- | | |
| L | CHEMICAL ABSTRACTS, vol. 100, no. 18, 1984, page 313, abstract no. 144229n, Columbus, Ohio, US; J.R. FARMER: "Wool fiberglass insulation manufacturing industry - background information for proposed standards", & U.S. ENVIRON. PROT. AGENCY OFF AIR QUAL. PLANN STAND., [TECH. REP.] EPA 1983 EPA 450/3 82 022A. 582 <br> ----- | | |

TECHNICAL FIELDS SEARCHED (Int. Cl.5)

C 03 B 37
B 01 D 47
B 01 D 50
D 04 H 1

The present search report has been drawn up for all claims

| Place of search | Date of completion of the search | Examiner |
|---|---|---|
| THE HAGUE | 05-06-1990 | HARBRON J.L. |